# FASCICULE DE BREVET EUROPEEN

(11) **EP 3 714 182 B1**
(45) Date de publication et mention de la délivrance du brevet: **19.04.2023**
(21) Numéro de dépôt: 18814498.4
(22) Date de dépôt: 21.11.2018
(51) Int. Cl.: F16D 65/14, F16H 57/08

(54) **PORTE-SATELLITES POUR ACTIONNEUR DE FREIN A REDUCTION DIFFERENTIELLE ET PROCEDE DE FABRICATION DUDIT PORTE-SATELLITES**
PLANETZAHNRADTRÄGER EINER BREMSE EINES PLANETENGETRIEBES, UND HERSTELLUNGSVERFAHREN SO EIN PLANETENZAHNRADTRÄGER
SATELLITE GEAR CARRIER FOR FOR A BRAKE REDUCTION GEAR, AND METHOD FOR MANUFACTURING SUCH SATELLITE GEAR CARRIER

(30) Priorité: 24.11.2017 FR 1761136
(43) Date de publication de la demande: 30.09.2020
(73) Titulaire: Foundation Brakes France, 93700 Drancy (FR)
(72) Inventeur: BOURLON, Philippe, 77230 Dammartin en Goele (FR); CUBIZOLLES, Cyril, 93700 Drancy (FR)
(74) Mandataire: IPAZ
(86) Numéro de dépôt international: PCT/EP2018/082076
(87) Numéro de publication internationale: WO 2019/101792

(56) Documents cités:
- DE-A1-102011 087 078
- FR-A1- 3 031 154
- JP-A- 2008 002 603

## Description

La présente invention se rapporte à un porte-satellites pour actionneur de frein à réduction différentielle et à un procédé de fabrication d'un porte-satellites. Le domaine de l'invention est celui des systèmes de freinage pour automobiles.

L'invention propose un porte-satellites comprenant une armature agencée et configurée pour porter des pignons satellites répartis angulairement autour de l'axe du porte-satellites. L'armature comprend une seule plaque agencée et configurée pour former une enveloppe cylindrique qui présente des ouvertures au travers desquelles fait saillie radialement un pignon satellite. La plaque présente une déformation réalisant une gorge longitudinale d'au moins un côté des ouvertures, le long d'une direction parallèle à l'axe du porte-satellites, de façon à supporter un ou des arbres de guidage en rotation dépassant desdits pignons satellites.

### Etat de la technique

Dans un véhicule, en particulier routier, la fonction de frein de stationnement et/ou de secours consiste à appliquer et maintenir un serrage de patins de freins liés à une partie solidaire du châssis, sur une partie mobile en rotation qui est liée à une ou plusieurs roues, typiquement un disque ou un tambour.

Dans les ensembles de freinage utilisant un ou des actionneurs électriques, il est connu d'utiliser un système vis-écrou pour exercer un appui linéaire sur le patin, souvent par l'intermédiaire d'un piston. Ce type de configuration existe pour un fonctionnement électrique seul, ou en combinaison avec un actionnement hydraulique de ce piston ou d'un autre.

En général, le système vis-écrou est actionné par un motoréducteur. Certains mécanismes réducteurs à engrenages comprennent un ou plusieurs trains épicycloïdaux. Un train épicycloïdal comprend deux planétaires (un premier planétaire, dit intérieur, et un second planétaire, dit extérieur) et des satellites portés par un porte-satellites. Chaque satellite engrène à la fois avec les deux planétaires qui sont disposés de manière coaxiale. Le plus souvent, le planétaire extérieur est denté intérieurement, et est souvent appelé "couronne". Dans ce cas, le planétaire intérieur est souvent appelé simplement "le planétaire", sans plus de précision.

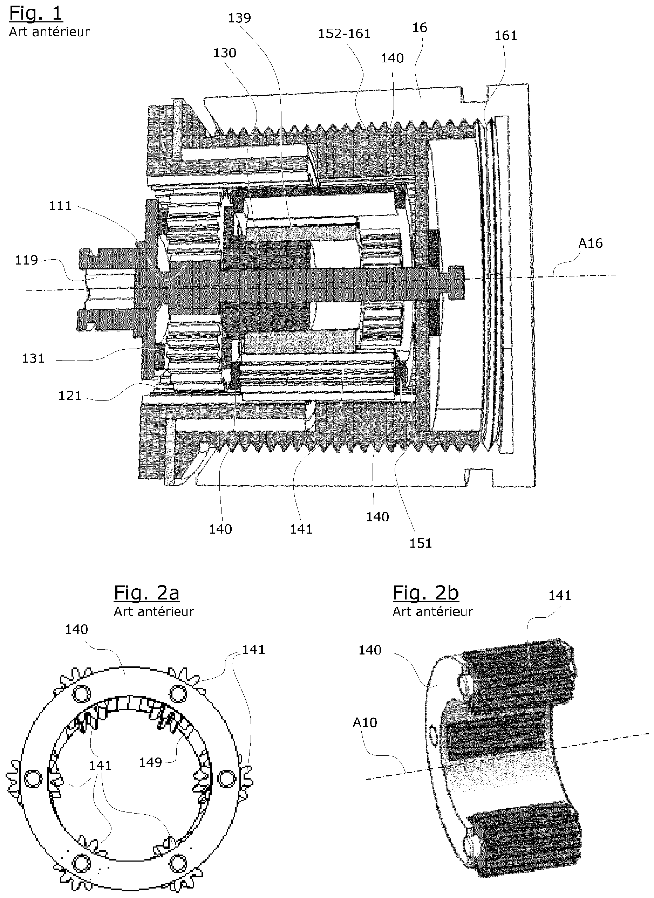

Le document FR 3 031 154 A1 divulgue un réducteur qui comprend deux étages de réduction. En référence à la Figure 1, il comprend un étage de réduction amont formé par un train épicycloïdal amont à satellites 131 et couronne fixe 121. Ce train amont est entraîné en entrée par son planétaire 111 intérieur, lui-même entraîné par un arbre denté portant une empreinte d'entraînement 119. Ce train épicycloïdal amont entraîne en sortie son porte-satellites 130. Ce porte-satellites 130 amont porte solidairement le planétaire 139 d'entrée pour un second étage de réduction dit réducteur épicycloïdal différentiel (DPR) à double couronne. Le second étage comprend un train épicycloïdal entraîné en entrée par le planétaire 139, et dont les satellites 141 engrènent avec une couronne fixe 121, ici la même que pour le train épicycloïdal amont. A partir de cette couronne fixe, par un porte-satellites 140 commun (également représenté par les Figures 2a et 2b), les satellites 141 du réducteur différentiel (DPR) entraînent en sortie une couronne mobile 151. Sur sa surface extérieure, cette couronne mobile 151 porte un filetage 152 coaxial aux trains épicycloïdaux, et coopérant avec un filetage 161 intérieur du piston 16 pour l'entraîner en translation.

De préférence, la couronne fixe 121 est commune aux deux trains épicycloïdaux, et les satellites différentiels 141 sont communs aux deux couronnes 121, 151 du train différentiel, lesquelles portent en général un nombre de dents différent de l'une à l'autre.

Le porte-satellites est généralement usiné ou fritté ou encore moulé, en métal ou en matière plastique. Le porte-satellites comprend une armature de forme générale simplement tubulaire ou approximativement et ouvert à ses extrémités axiales. En référence aux Figure 2a et 2b, l'armature du porte-satellites 140 présente la forme d'un tube dont l'épaisseur de la paroi est telle que la paroi englobe l'arbre de rotation de chaque satellite. Le porte-satellites est usiné radialement le long de sa circonférence de façon à réaliser plusieurs fenêtres 149, de forme sensiblement rectangulaire, chaque fenêtre étant prévue pour recevoir un satellite. Chaque fenêtre est délimitée longitudinalement à chaque extrémité par une partie support du tube formant support de rotation pour chaque satellite. Un alésage est usiné sur chaque face transversale d'une partie support pour recevoir un arbre de rotation d'un satellite. Ainsi usiné, le porte-satellites constitue une cage pour les satellites. Chaque partie support formant un flasque transversale pour chaque extrémité de satellite et les satellites font saillies radialement de la circonférence du porte-satellites. Chaque arbre de guidage est serti dans un alésage du porte-satellites, chaque satellite étant monté librement en rotation sur un arbre de guidage. Chaque satellite présente un alésage longitudinal traversant, qui débouche sur chaque face transversale et est agencé et configuré pour recevoir un arbre de guidage.

Cependant, il reste intéressant de faciliter le montage et abaisser le coût de fabrication. Le document JP 2008 002603A décrit un autre type de porte-satellites conventionnel.

Un but de l'invention est de proposer un porte-satellite permettant de faciliter le montage des satellites sur le porte-satellites. Un autre but de l'invention est de proposer un procédé de fabrication dudit porte-satellites afin d'abaisser son coût de fabrication. Ces objectifs sont recherchés tout en minimisant le poids des pièces en particulier mobiles et en optimisant le mode de fonctionnement et la fiabilité du mécanisme.

### Exposé de l'invention

Selon un premier aspect, l'invention propose un porte-satellites du type sans arbre de couplage d'entrée ou de sortie, et plus particulièrement un porte-satellites pour un train épicycloïdal d'un actionneur de frein à réduction différentielle pour l'actionnement d'un frein de stationnement de véhicule automobile. Le porte-satellites comprend une armature agencée et configurée pour porter des pignons satellites répartis angulairement autour de l'axe du porte-satellites. De préférence, les pignons satellites sont répartis angulairement de manière régulière le long de l'armature.

Selon l'invention l'armature comprend au moins une plaque agencée et configurée pour former une enveloppe cylindrique, ladite plaque présentant des ouvertures au travers desquelles fait saillie radialement un pignon satellite. De préférence, il s'agit d'une plaque formant une pièce unique venue de matière, et par exemple une seule plaque. La plaque présente une succession de gorges longitudinales, s'étendant d'au moins un côté des ouvertures le long d'une direction parallèle à l'axe du porte-satellites, de façon à supporter un ou des arbres de guidage en rotation dépassant desdits pignons satellites. De préférence, cette gorge est réalisée par une partie de la plaque qui est déformée en arc de cercle, typiquement sans modification de son épaisseur, autour de l'axe de cet arc de cercle. Cette déformation est par exemple réalisée par déformation plastique, par exemple par estampage ou matriçage, par exemple simultanément à la découpe des ouvertures ou dans une même série d'opérations réalisées successivement de manière automatisée sous presse. Alternativement ou en combinaison, cette gorge peut aussi être réalisée par d'autres procédé modifiant l'épaisseur de la plaque à cet endroit, par exemple par poinçonnement et/ou par enlèvement de matière.

Un porte-satellites selon l'invention permet de faciliter l'opération de montage des satellites sur le porte-satellites, et de faciliter sa fabrication, et d'abaisser ainsi son coût de fabrication.

On entend ici par "plaque" une pièce mince selon une dimension par rapport à ses autres dimensions, par exemple d'au plus 10%, et typiquement d'une épaisseur sensiblement constante, par exemple à 20% près. De préférence, la plaque de l'armature présente une épaisseur constante le long de la circonférence de l'armature. La plaque, au niveau de chaque gorge, présente par exemple une épaisseur constante, égale au reste de l'armature, par exemple avec une tolérance de plus ou moins 20% (vingt pour cent).

Chaque gorge permet de réaliser un palier de rotation pour guider en rotation un arbre de guidage d'un pignon satellite.

Selon un mode de réalisation préféré, une gorge longitudinale est prévue de chaque côté des ouvertures le long d'une direction parallèle à l'axe du porte-satellites, de façon à supporter un ou des arbres de guidage en rotation dépassant desdites pignons satellites.

Chaque gorge débouche radialement par un passage dont la largeur est inférieure au diamètre de l'arbre de guidage en rotation qu'elle reçoit, de façon à permettre une insertion par clipsage radial dudit arbre de guidage. Cette caractéristique permet de maintenir en position chaque pignon satellite dans une gorge. Cette caractéristique est en particulier avantageuse pour faciliter le montage du porte-satellites dans un actionneur, une fois muni des satellites.

La gorge est réalisée par exemple selon l'un des deux modes de réalisation suivants. Selon un premier mode, la déformation de la plaque réalisant la gorge est telle qu'elle s'étend vers l'intérieur du porte-satellites selon une direction radiale à l'axe de rotation du porte-satellites, c'est-à-dire en se rapprochant de l'axe de rotation ; l'ouverture de la gorge étant alors débouchante vers l'extérieur du porte-satellites. Selon un second mode, la déformation de la plaque réalisant la gorge est telle qu'elle s'étend vers l'extérieur selon une direction radiale à l'axe de rotation du porte-satellites, c'est-à-dire en s'écartant de l'axe de rotation, l'ouverture de la gorge étant alors débouchante vers l'intérieur du porte-satellites. Chacun de ces deux modes de réalisation peut être mis en oeuvre pour tous les satellites, ou seulement une partie d'entre eux.

Typiquement, l'armature est agencée et configurée pour former seulement une enveloppe cylindrique, sans élément de transmission de couple depuis le porte-satellites vers d'autres éléments mécaniques. L'enveloppe cylindrique forme sensiblement un tube, débouchant à chaque extrémité axiale sans flasque d'obturation. Elle peut être constitué d'une ou de plusieurs plaques. Ces caractéristiques permettent de faciliter la fabrication du porte-satellites.

Selon un mode de réalisation préféré, l'armature est constituée d'une seule plaque, formant tout le pourtour de la cage et/ou sur une seule épaisseur. Cette caractéristique permet de faciliter la fabrication et l'assemblage d'un porte-satellites et d'abaisser ainsi le coût de fabrication.

Par exemple, le porte-satellites est réalisé en matériau métallique ou en matériau plastique. Le porte-satellites en matériau plastique est par exemple réalisé par moulage, par exemple à l'aide d'un procédé thermique tel qu'une injection de thermoplastique ou thermodurcissable, et/ou d'une résine chimique.

Selon un second aspect de l'invention, qui est conforme au premier aspect, le porte-satellites comprend au moins un pignon satellite. De préférence, l'au moins un pignon satellite présente un ou au moins deux arbres de guidage en rotation.

Dans le cas d'un seul arbre, celui-ci traverse entièrement le pignon satellite, via un alésage réalisé de manière coaxiale dans le pignon, de façon à dépasser axialement de part et d'autre d'une partie dentée dudit pignon.

Dans le cas de deux arbres, chaque arbre est placé dans un alésage réalisé de part et d'autre d'un pignon satellite, les deux alésages étant coaxiaux. Chaque arbre est prévu pour dépasser axialement de part et d'autre d'une partie dentée du pignon.

Dans les deux cas, chaque arbre de guidage en rotation est agencé et configuré pour être guidé en rotation par une gorge de l'armature du porte-satellites. L'ensemble porte-satellites et satellites ainsi proposé a pour avantage d'être plus facile à fabriquer et à assembler, permettant d'abaisser ainsi son coût de fabrication.

Typiquement, la longueur axiale des satellites est comprise entre 2 mm et 50 mm, de préférence entre 5 et 30 mm, de manière encore préférée entre 15 et 25 mm, par exemple égale à 19 mm, ou 20 mm ou 21 mm.

Typiquement, possiblement en combinaison avec différentes valeurs de dimensions axiales exposées ici, le diamètre des satellites est compris entre 2 mm et 40 mm, de préférence entre 4 et 30 mm, de manière encore préférée entre 6 et 20 mm, par exemple égal à 9 mm, ou 10 mm ou 11 mm.

Selon un troisième aspect de l'invention, qui est conforme à l'un des deux ou aux deux aspects précédents, il est proposé un procédé de fabrication d'un porte-satellites comprenant les étapes suivantes :
- fournir une plaque d'une longueur déterminée pour réaliser un ou plusieurs porte-satellites tels qu'exposés ici,
- découper des portions à intervalle régulier, de façon à former les ouvertures pour recevoir les satellites dans ladite plaque de manière fonctionnelle,
- mettre en forme la plaque le long d'une ligne traversant chaque ouverture, de façon à former la ou les gorges de ladite ouverture,
- courber la plaque de façon à former une enveloppe cylindrique,
- relier fixement les extrémités de la plaque entre elles.

La plaque peut être découpée d'une plaque plus grande provenant par exemple d'un rouleau.

De préférence, les portions à découper sont rectangulaires. Ils sont par exemple réalisés par estampage ou emboutissage.

La formation des gorges est par exemple réalisée par poinçonnage, matriçage, estampage ou emboutissage.

L'étape de courber la plaque peut être réalisée par cintrage.

Ces types d'opération étant simple et économique à réaliser en grande série, le procédé de fabrication selon l'invention permet ainsi d'abaisser le coût de fabrication d'un porte-satellites.

De préférence, le procédé de fabrication comprend en outre les étapes suivantes :
- découper une première extrémité de la plaque de façon à former une queue d'aronde contenante, ou femelle, et découper une deuxième extrémité de ladite plaque, opposée à la première, de façon à former une queue d'aronde contenue, ou mâle, lesdites queues d'aronde étant agencées et configurées pour s'emboîter l'une dans l'autre,
- introduire la queue d'aronde contenue dans la queue d'aronde contenante, après avoir courbée la plaque de façon cylindrique, pour relier lesdites extrémités.

Ces caractéristiques permettent de fermer l'armature de manière simple et d'abaisser ainsi le coût de fabrication.

Selon un quatrième aspect de l'invention, qui est conforme à l'un des deux premiers aspects ou aux deux premiers aspects, il est proposé un procédé de fabrication d'un porte-satellites caractérisé en ce que le porte-satellites est moulé par injection.

Selon un cinquième aspect de l'invention, qui est conforme à l'un des deux premiers aspects ou aux deux premiers aspects, il est proposé un procédé d'assemblage d'un porte-satellites, comportant les étapes consistant à :
- réaliser l'armature du porte-satellites,
- dans la ou les ouvertures de l'armature, introduire un pignon muni d'au moins un arbre de guidage en rotation et formant un satellite, de façon à ce que ledit arbre de guidage en rotation soit dans une position coaxiale dans une gorge de l'armature.

De préférence, chaque gorge débouche radialement par un passage dont la largeur est inférieure au diamètre de l'arbre de guidage en rotation qu'elle reçoit, de façon que lors de l'étape d'introduction d'un satellite dans une gorge, ladite étape comprend une opération de clipsage de chaque arbre d'un pignon satellite dans chaque gorge. Lors de ce clipsage, chaque arbre de guidage est déplacé dans une direction sensiblement radiale par rapport à l'axe de rotation du porte-satellites pour venir s'insérer dans une gorge, soit en s'écartant de l'axe de rotation, soit en se rapprochant de l'axe de rotation selon la conformation des déformations formant les gorges.

Selon un sixième aspect de l'invention, qui est conforme au premier aspect, il est proposé un actionneur de frein comprenant un porte-satellites.

### Liste des figures

D'autres particularités et avantages de l'invention ressortiront de la description détaillée d'un mode de mise en oeuvre nullement limitatif, et des dessins annexés sur lesquels :
- la FIGURE 1 est une vue en coupe longitudinale d'une partie d'un mécanisme d'un actionneur de frein, incluant un porte-satellites selon l'art antérieur,
- les FIGURES 2a et 2b sont des vues du porte-satellites selon l'art antérieur de la FIGURE 1, la FIGURE 2a étant une vue axiale en légère perspective, la FIGURE 2b étant une vue en perspective d'une coupe du porte-satellites montrant trois de ses satellites,
- la FIGURE 3 est une image de synthèse vue en perspective d'un porte-satellites selon l'invention, une fois assemblé, dans un exemple de mode de réalisation portant six satellites,
- la FIGURE 4 est une vue en perspective et en éclaté, ou avant montage, d'un porte-satellites conforme à la FIGURE 3,
- la FIGURE 5 est un détail du porte-satellites de la FIGURE 4, montrant une déformation de la cage réalisant une gorge selon un mode de réalisation,

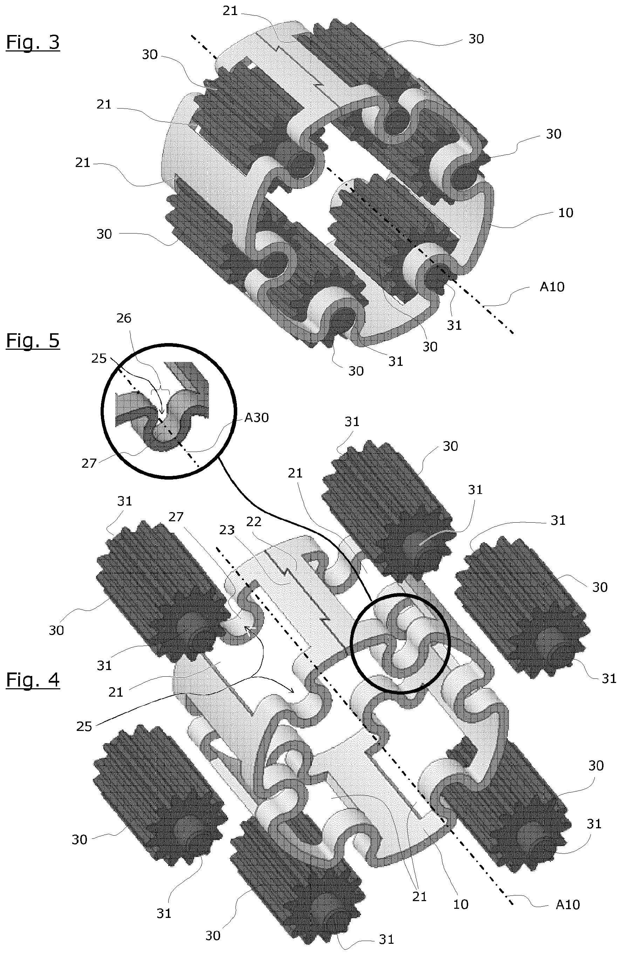

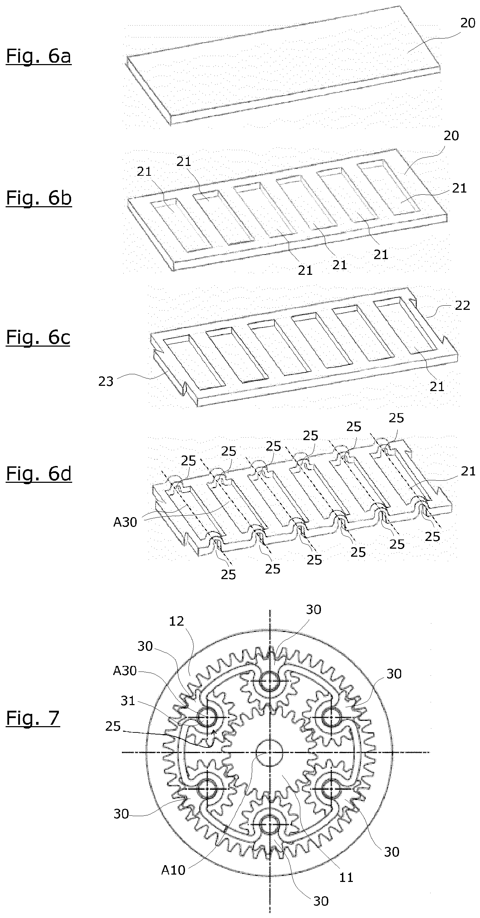

- les FIGURES 6a, 6b, 6c et 6d sont des vues schématiques en perspective d'une plaque utilisée pour réaliser la cage d'un porte-satellites conforme à celui de la FIGURE 3, chaque vue montrant le résultat d'une étape de fabrication, la FIGURE 6a montrant une plaque rectangulaire pleine et droite, la FIGURE 6b montrant la plaque de la FIGURE 6a présentant en outre des ouvertures réparties le long de celle-ci, la FIGURE 6c montrant la plaque de la FIGURE 6b présentant en outre une découpe d'accrochage à chaque extrémité longitudinale, la FIGURE 6d montrant la plaque de la FIGURE 6c présentant en outre des gorges agencées dans une direction transversale à la plaque,
- la FIGURE 7 est une vue axiale d'un train épicycloïdal incluant un porte-satellites selon l'invention dans une version à six satellites, les satellites coopérant à la fois avec une couronne dentée intérieurement et avec une roue dentée placée au centre du porte-satellites.

### Description d'un exemple de mode de réalisation

Les FIGURES 3 et 4 illustrent un porte-satellites 10 du type sans arbre de couplage ou sans pièce de couplage entre le porte-satellites et un arbre en rotation. Le porte-satellites est destiné à coopérer avec seulement des pignons satellites 30, c'est à dire que la rotation de la cage ne transmet aucun effort significatif à un quelconque autre élément mécanique du mécanisme, ou aucun effort entrant dans la chaîne dynamique d'actionnement. La FIGURE 7 illustre un tel porte-satellites 10, dit sans pièce de couplage, faisant partie d'un train épicycloïdal à réduction différentielle au sein d'un actionneur de frein, par exemple pour l'actionnement d'un frein de stationnement de véhicule automobile. Le porte-satellites 10, portant les pignons satellites 30, est inséré entre un pignon planétaire central 11 et une couronne dentée intérieurement 12 ; les trois éléments étant disposés coaxialement par rapport à l'axe de rotation A10. Seuls les pignons satellites 30 sont en contact simultané avec le pignon 11 et la couronne 12. Chaque pignon satellite 30 est porté par le porte-satellites 10, par l'intermédiaire d'un ou deux arbres de guidage en rotation 31 autour d'un axe de rotation A30.

Cet ensemble forme par exemple une partie d'un train épicycloïdal à réduction différentielle, par exemple au sein d'un mécanisme similaire à celui de la FIGURE 1. Le porte-satellites 10 et ses satellites 30 selon l'invention peuvent par exemple remplacer le porte-satellites 140 et les satellites 141 des FIGURE 1, 2a et 2b.

Selon le mode de réalisation préféré décrit par les FIGURES 3 et 4, le porte-satellites 10 forme une armature agencée et configurée pour porter des pignons satellites 30 répartis angulairement autour de l'axe A10 du porte-satellites et le long de l'armature. Les pignons satellites 30 sont ici répartis angulairement de manière régulière le long de ladite armature.

De manière avantageuse, l'armature est constituée d'une seule plaque 20 agencée et configurée pour former une enveloppe globalement cylindrique, de façon que l'armature présente la forme générale d'un tube circulaire, qui est entièrement débouchant à chacune de ses deux extrémités.

L'armature présente des ouvertures 21 au travers desquelles des pignons satellites 30 font saillie radialement, du côté intérieur et du côté extérieur, voir FIGURE 3. Les ouvertures 21 sont réalisées dans la plaque 20 de façon à pouvoir recevoir chacune un pignon satellite, typiquement un seul par ouverture. De préférence, les ouvertures 21 sont de forme rectangulaire. Dans l'exemple illustré aux FIGURES 3 et 4, les ouvertures 21 s'étendent principalement dans une direction parallèle à l'axe de rotation A10 du porte-satellites, et reçoivent des satellites allongés selon leur axe de rotation. Ces satellites portent chacun deux arbres 31 dépassant des deux faces transversales opposées. Selon d'autres modes de réalisation non représentés, les ouvertures s'étendent principalement dans une direction perpendiculaire à l'axe de rotation A10 du porte-satellites, possiblement mais non obligatoirement pour recevoir des satellites d'un diamètre plus grand que selon leur axe de rotation.

Optionnellement, par exemple dans le cas de satellites plus larges que long, ceux-ci peuvent ne comporter qu'un seul arbre dépassant d'une seule de ses faces transversales.

Le ou les arbres sont par exemple venus de matière avec le satellite lors de sa fabrication, par exemple par moulage. Selon un autre exemple, ils sont formés par exemple par une ou des pièces préalables sur lesquelles est surmoulé le corps et la denture du satellite.

Optionnellement, le ou les arbres sont réalisés par des pièces séparées montées sur le satellite 31 avant ou après son montage dans la cage 10.

L'armature forme des gorges longitudinales 25 dont la surface intérieure présente une section en arc de cercle, pour former un palier apte à supporter chacune un arbre de guidage en rotation dépassant d'un pignon satellite. Dans cet exemple, comme visible à la FIGURE 4, deux gorges 25 sont prévues pour chaque ouverture 21. Les deux gorges 25 sont agencées de manière coaxiale de part et d'autre d'une ouverture 21, l'axe desdites deux gorges étant parallèle à l'axe de rotation A10 du porte-satellites. Chaque gorge 25 débouche axialement, à une première extrémité vers l'extérieur de l'armature, et à une seconde extrémité sur l'intérieur d'une ouverture 21. De préférence, les gorges 25 sont réalisées par déformation de la plaque 20, comme illustré aux FIGURES 3 et 4 et en particulier la FIGURE 5. On entend par déformation, un changement local brusque du contour de l'enveloppe cylindrique. L'épaisseur de la plaque 20 est ici sensiblement constante le long de toute la surface de l'armature, ainsi que le long de la partie formant chaque gorge.

De préférence, et en référence à la FIGURE 5, chaque gorge 25 débouche radialement, sur le côté, par un passage 26 dont la largeur est inférieure au diamètre de l'arbre de guidage en rotation d'un pignon satellite que la gorge reçoit, de façon à permettre une insertion par clipsage latéral dudit arbre de guidage, c'est à dire selon une direction radiale. Chaque gorge 25 présente une surface de réception 27 correspondant à la surface de la gorge prévue pour entrer en contact avec la surface extérieure d'un arbre de guidage en rotation 31 d'un satellite. Selon un plan perpendiculaire à l'axe de rotation A30, la surface de réception 27 présente un profil en forme de fer à cheval de sorte que le fond de la gorge présente la forme d'au moins un demi-cercle, voir plus dans le cas d'un passage 26 plus étroit que l'arbre 31. Une fois qu'un arbre de guidage en rotation 31 est placé dans une gorge 25, la surface de réception 27 de la gorge entoure plus de la moitié de la circonférence d'un arbre de guidage 31 (voir FIGURES 3 et 7). Chaque gorge 25 forme ainsi un palier de guidage en rotation d'un arbre de guidage en rotation d'un pignon satellite, selon un axe A30 parallèle à l'axe central A10 du porte-satellites.

Selon le mode de réalisation représenté aux FIGURES 3, 4 et 7, le passage des gorges débouche radialement vers l'extérieur par rapport à l'axe de rotation A10 du porte-satellites, de façon que chaque pignon satellite 30 peut être assemblé par insertion dans sa gorge selon un mouvement qui le rapproche de l'axe de rotation A10 du porte-satellites. Chaque gorge fait saillie radialement en se rapprochant de l'axe de rotation A10 du porte-satellites.

Selon un autre mode de réalisation non représenté, le passage des gorges débouchent radialement vers l'intérieur du porte-satellites, de façon que chaque pignon satellite 30 s'insère dans sa gorge par un mouvement qui l'écarte de l'axe de rotation A10 du porte-satellites. Chaque gorge fait alors saillie radialement en s'écartant de l'axe de rotation A10 du porte-satellites.

On va maintenant décrire, en référence aux FIGURES 6a, 6b, 6c et 6d un exemple de procédé de fabrication d'un tel porte-satellites.

En référence à la FIGURE 6a, une plaque 20 d'une longueur et d'une largeur déterminées est fournie, ou découpée depuis une plaque plus grande. On entend par longueur et largeur déterminées, des dimensions extérieures correspondantes, ou légèrement majorées, aux dimensions d'une enveloppe cylindrique d'un porte-satellites conforme aux FIGURES 3 ou 4. L'épaisseur de la plaque 20 est sensiblement constante le long de sa surface.

En référence à la FIGURE 6b, les ouvertures 21 ont été réalisées dans la plaque 20. Pour cela, une succession de portions rectangulaires sont découpées à intervalles réguliers le long de la future périphérie de la cage du porte-satellite, de façon à former les ouvertures 21 pour recevoir le corps denté des satellites. Cette opération est par exemple réalisée par emboutissage.

De préférence mais non obligatoirement, il est réalisé des formes ou des découpes d'accrochage 22, 23 à chaque extrémité de la plaque 20, des deux côtés de la succession d'ouvertures 21. Les découpes d'accrochage sont destinées à faire coopérer chaque extrémité l'une avec l'autre et les relier fixement, par exemple par coopération de formes complémentaires, après avoir cintrée la plaque pour former une enveloppe cylindrique. En référence à la FIGURE 6c, il est prévu par exemple de découper une première extrémité de la plaque de façon à former une queue d'aronde contenante 22, dite aussi femelle, et découper une deuxième extrémité de ladite plaque, opposée à la première, de façon à former une queue d'aronde contenue 23, dite aussi mâle, lesdites queues d'aronde étant agencée pour s'emboîter l'une dans l'autre, une fois la plaque 20 cintrée et/ou courbée jusqu'à relier les deux extrémités de la plaque 20. Les queues d'aronde peuvent être réalisées par emboutissage.

Alternativement, les deux extrémités de la plaque peuvent comporter des formes d'accrochages différentes. Elles peuvent aussi être solidarisées de façon différente, par exemple par soudure, sertissage, agrafage, ou par tout moyen connu.

En référence à la FIGURE 6d, il est réalisé une déformation de la plaque 20 le long d'une ligne traversant chaque ouverture 21, de façon à former deux gorges 25 coaxiales d'axe A30 pour chaque ouverture 21. Les gorges 25 sont agencées et configurées pour guider en rotation les arbres de guidage des satellites. Les déformations sont par exemple réalisées par déformation plastique à froid, par exemple emboutissage ou poinçonnage.

Par exemple après réalisation des ouvertures 21 et des gorges 25 réalisées, dans l'ordre énoncé ci-dessus ou dans un autre ordre, la plaque 20 est cintrée et/ou courbée de façon à former une enveloppe cylindrique autour de l'axe A10 qui sera celui du porte-satellites. Les extrémités de ladite plaque sont alors fixées entre elles, ici par emboîtement des queues d'aronde 22, 23 l'une dans l'autre de façon à relier fixement les deux extrémités de la plaque.

On va maintenant décrire un procédé d'assemblage d'un porte-satellites avec des satellites tels que décrits ci-dessus.

A partir d'un porte-satellites tel que fabriqué selon le procédé ci-dessus, chaque pignon muni d'au moins un arbre de guidage en rotation et formant un satellite est introduit dans une ouverture, de façon à ce que ledit arbre de guidage en rotation soit dans une position coaxiale dans une gorge de l'armature.

Selon un mode de réalisation des satellites, un arbre de guidage en rotation est inséré dans un alésage traversant agencé dans un pignon de façon que ledit arbre de guidage en rotation dépasse de part et d'autre du pignon. Dans ce mode de réalisation, l'arbre de guidage présente par exemple une longueur sensiblement égale à la longueur du pignon et de deux gorges.

Selon un autre mode de réalisation des satellites, le pignon présente un alésage à chaque extrémité axiale, de façon à recevoir un arbre de guidage en rotation. Les arbres de rotation sont par exemple insérés par frettage.

Encore selon un autre mode de réalisation, ces arbres sont intégrés au pignon avant montage. Ils sont par exemple venus de matière avec le pignon, ou forment une pièce rapportée autour de laquelle le pignon est réalisé par frittage ou surmoulage.

Dans cet exemple, chaque gorge débouche radialement par un passage latéral, dont la largeur est inférieure au diamètre de l'arbre de guidage en rotation qu'elle reçoit, de façon que lors de l'étape d'introduction d'un satellite dans une gorge, ladite étape comprend une opération de clipsage de chaque arbre d'un pignon satellite dans chaque gorge.

Bien sûr, l'invention n'est pas limitée aux exemples qui viennent d'être décrits et de nombreux aménagements peuvent être apportés à ces exemples sans sortir du cadre de l'invention. Le cadre de l'invention est déterminé par les revendications.

### Nomenclature

- A16: axe de l'actionneur
- A140: axe du porte-satellites
- 111: pignon planétaire amont
- 119: extrémité d'entraînement de l'arbre d'entrée
- 121: denture de la couronne fixe
- 130: porte-satellites amont
- 131: satellites du train épicycloïdal amont
- 139: pignon planétaire
- 140: porte-satellites
- 141: satellites
- 149: fenêtres longitudinales du porte-satellites différentiel
- 151: denture de la couronne mobile
- 152: filetage de la vis
- 16: pièce formant écrou et piston de frein
- 161: filetage intérieur de piston-écrou

- A10: axe du porte-satellites de DPR
- A30: axe d'un arbre de guidage d'un satellite de DPR
- 10: porte-satellites de DPR
- 11: pignon-roue planétaire centrale de DPR
- 12: couronne de DPR
- 20: plaque
- 21: ouvertures longitudinales du porte-satellites de DPR
- 22: queue d'aronde contenante
- 23: queue d'aronde contenue
- 25: gorge
- 27: surface de réception
- 26: passage
- 30: satellites de DPR
- 31: arbre de guidage de satellite de DPR

## Revendications

1. Porte-satellites (10), pour un train épicycloïdal d'un actionneur de frein, notamment à réduction différentielle, pour l'actionnement d'un frein de stationnement de véhicule automobile, lequel porte-satellites comprend une armature agencée et configurée pour porter des pignons satellites (30) répartis angulairement autour de l'axe (A10) du porte-satellites,
**caractérisé en ce que** l'armature comprend au moins une plaque (20) agencée et configurée pour former une enveloppe cylindrique, ladite plaque présentant des ouvertures (21) au travers desquelles fait saillie radialement un pignon satellite (30),
**et en ce que** la plaque (20) présente une gorge (25) longitudinale s'étendant d'au moins un côté des ouvertures, le long d'une direction parallèle à l'axe du porte-satellites, de façon à supporter un ou des arbres de guidage en rotation (31) dépassant desdits pignons satellites (30).

2. Porte-satellites (10) selon la revendication 1, **caractérisé en ce que** chaque gorge (25) débouche radialement par un passage (26) dont la largeur est inférieure au diamètre de l'arbre de guidage en rotation (31) qu'elle reçoit de façon à permettre une insertion par clipsage radial dudit arbre de guidage.

3. Porte-satellites (10) selon la revendication 1 ou 2, **caractérisé en ce que** l'armature est agencée et configurée pour former seulement une enveloppe cylindrique.

4. Porte-satellites (10) selon l'une des revendications 1 à 3, **caractérisé en ce que** l'armature est constituée d'une seule plaque (20).

5. Porte-satellites (10) selon l'une des revendications 1 à 4, **caractérisé en ce qu'**il est réalisé en matériau métallique.

6. Porte-satellites (10) selon l'une des revendications 1 à 4, **caractérisé en ce qu'**il est réalisé en matériau plastique.

7. Porte-satellites (10) selon l'une des revendications 1 à 6, **caractérisé en ce qu'**il comprend au moins un pignon satellite (30).

8. Porte-satellites (10) selon la revendication 7, **caractérisé en ce que** l'au moins un pignon satellite (30) présente au moins deux arbres de guidage en rotation (31) de part et d'autre d'une partie dentée dudit pignon, chaque arbre de guidage en rotation étant agencé et configuré pour être guidé en rotation par une gorge (25) de l'armature du porte-satellites.

9. Procédé de fabrication d'un porte-satellites (10) selon l'une quelconque des revendications 1 à 8, comprenant les étapes suivantes :
- fournir une plaque (20) d'une longueur déterminée,
- découper des portions à intervalle régulier, de façon à former les ouvertures (21) pour recevoir les satellites (30) dans ladite plaque,
- mettre en forme la plaque (20) le long d'une ligne traversant chaque ouverture, de façon à former la ou les gorges (25) de ladite ouverture,
- courber la plaque (20) de façon à former une enveloppe cylindrique,
- relier fixement les extrémités de la plaque entre elles.

10. Procédé de fabrication d'un porte-satellites (10) selon la revendication précédente, comprenant en outre les étapes suivantes :
- découper une première extrémité de la plaque de façon à former une queue d'aronde contenante (22) et découper une deuxième extrémité de ladite plaque, opposée à la première, de façon à former une queue d'aronde contenue (23), lesdites queues d'aronde étant agencées et configurées pour s'emboîter l'une dans l'autre,
- introduire la queue d'aronde contenue (23) dans la queue d'aronde contenante (22), après avoir courbée la plaque (20) de façon cylindrique, pour relier lesdites extrémités.

11. Procédé de fabrication d'un porte-satellites (10) selon l'une quelconque des revendications 1 à 8, **caractérisé en ce que** le porte-satellites est moulé par injection.

12. Procédé d'assemblage d'un porte-satellites (10), selon l'une quelconque des revendications 1 à 8, **caractérisé en ce qu'**il comporte les étapes consistant à :
- réaliser l'armature du porte-satellites,
- dans la ou les ouvertures (21) de l'armature, introduire un pignon (30) muni d'au moins un arbre de guidage en rotation (31) et formant un satellite, de façon à ce que ledit arbre de guidage en rotation soit dans une position coaxiale dans une gorge (25) de l'armature.

13. Procédé d'assemblage selon la revendication précédente, **caractérisé en ce que** chaque gorge (25) débouche radialement par un passage (26) dont la largeur est inférieure au diamètre de l'arbre de guidage en rotation (31) qu'elle reçoit, de façon que lors de l'étape d'introduction d'un satellite (30) dans une gorge (25), ladite étape comprend une opération de clipsage de chaque arbre (31) d'un pignon satellite dans chaque gorge (25).

14. Actionneur de frein comprenant un porte-satellites (10) selon l'une quelconque des revendications 1 à 8.

## Patentansprüche

1. Planetenträger (10) für einen Planetengetriebezug eines Bremsaktuators, insbesondere mit Differenzialreduktion, zur Betätigung einer Feststellbremse eines Kraftfahrzeugs, wobei der Planetenträger einen Anker umfasst, der so angeordnet und ausgestaltet ist, dass er Planetenräder (30) trägt, die winkelmäßig um die Achse (A10) des Planetenträgers verteilt sind,
**dadurch gekennzeichnet, dass** der Anker wenigstens eine Platte (20) umfasst, die so angeordnet und ausgestaltet ist, dass sie eine zylindrische Hülle bildet, wobei die Platte Öffnungen (21) aufweist, durch die ein Planetenrad (30) radial vorragt,
und dass die Platte (20) eine Längsnut (25) aufweist, die sich auf wenigstens einer Seite der Öffnungen entlang einer Richtung parallel zur Achse des Planetenträgers erstreckt, um eine oder mehrere Drehführungswellen (31) zu tragen, die über die Planetenräder (30) hinausragen.

2. Planetenträger (10) nach Anspruch 1, **dadurch gekennzeichnet, dass** jede Nut (25) radial in einen Durchgang (26) mündet, dessen Breite kleiner ist als der Durchmesser der Drehführungswelle (31), die sie aufnimmt, sodass ein Einfügen durch radiales Einklipsen der Führungswelle ermöglicht wird.

3. Planetenträger (10) nach Anspruch 1 oder 2, **dadurch gekennzeichnet, dass** der Anker so angeordnet und ausgestaltet ist, dass er nur eine zylindrische Hülle bildet.

4. Planetenträger (10) nach einem der Ansprüche 1 bis 3, **dadurch gekennzeichnet, dass** der Anker aus einer einzigen Platte (20) besteht.

5. Planetenträger (10) nach einem der Ansprüche 1 bis 4, **dadurch gekennzeichnet, dass** er aus einem metallischen Material hergestellt ist.

6. Planetenträger (10) nach einem der Ansprüche 1 bis 4, **dadurch gekennzeichnet, dass** er aus einem Kunststoffmaterial hergestellt ist.

7. Planetenträger (10) nach einem der Ansprüche 1 bis 6, **dadurch gekennzeichnet, dass** er wenigstens ein Planetenrad (30) umfasst.

8. Planetenträger (10) nach Anspruch 7, **dadurch gekennzeichnet, dass** das wenigstens eine Planetenrad (30) wenigstens zwei Drehführungswellen (31) auf beiden Seiten eines gezahnten Teils des Rades aufweist, wobei jede Drehführungswelle so angeordnet und ausgestaltet ist, dass sie durch eine Nut (25) des Ankers des Planetenträgers drehbar geführt wird.

9. Verfahren zur Herstellung eines Planetenträgers (10) nach einem der Ansprüche 1 bis 8, umfassend die folgenden Schritte:
- Bereitstellen einer Platte (20) mit einer bestimmten Länge,
- Ausschneiden von Abschnitten in regelmäßigen Abständen, um die Öffnungen (21) zur Aufnahme der Planeten (30) in der Platte zu bilden,
- Formen der Platte (20) entlang einer durch jede Öffnung verlaufenden Linie, um die eine oder die mehreren Nuten (25) der Öffnung zu bilden,
- Krümmen der Platte (20), um eine zylindrische Hülle zu bilden,
- festes Verbinden der Enden der Platte miteinander.

10. Verfahren zur Herstellung eines Planetenträgers (10) nach dem vorhergehenden Anspruch, ferner umfassend die folgenden Schritte:
- Ausschneiden eines ersten Endes der Platte, um einen weiblichen Schwalbenschwanz (22) zu bilden, und Ausschneiden eines zweiten Endes der Platte, das dem ersten entgegengesetzt ist, um einen männlichen Schwalbenschwanz (23) zu bilden, wobei die Schwalbenschwänze so angeordnet und ausgestaltet sind, dass sie ineinandergefügt werden können,
- Einfügen des männlichen Schwalbenschwanzes (23) in den weiblichen Schwalbenschwanz (22), nachdem die Platte (20) zylindrisch gekrümmt wurde, um die Enden miteinander zu verbinden.

11. Verfahren zur Herstellung eines Planetenträgers (10) nach einem der Ansprüche 1 bis 8, **dadurch gekennzeichnet, dass** der Planetenträger spritzgegossen wird.

12. Verfahren zum Zusammenbauen eines Planetenträgers (10) nach einem der Ansprüche 1 bis 8, **dadurch gekennzeichnet, dass** es die folgenden Schritte umfasst:
- Herstellen des Ankers des Planetenträgers,
- Einführen eines Zahnrads (30), das mit wenigstens einer Drehführungswelle (31) versehen ist und einen Planeten bildet, in die eine oder die mehreren Öffnungen (21) des Ankers, sodass sich die Drehführungswelle in einer koaxialen Position in einer Nut (25) des Ankers befindet.

13. Verfahren zum Zusammenbauen nach dem vorhergehenden Anspruch, **dadurch gekennzeichnet, dass** jede Nut (25) radial in einen Durchgang (26) mündet, dessen Breite kleiner ist als der Durchmesser der Drehführungswelle (31), die sie aufnimmt, sodass beim Schritt des Einfügens eines Planeten (30) in eine Nut (25) der Schritt einen Vorgang des Einklipsens jeder Welle (31) eines Planetenrads in jede Nut (25) umfasst.

14. Bremsaktuator, umfassend einen Planetenträger (10) nach einem der Ansprüche 1 bis 8.

## Claims

1. Planet carrier (10) for an epicyclic gear train of a brake actuator, in particular a differential reduction brake actuator, for actuating a parking brake of a motor vehicle, which planet carrier comprises a framework arranged and configured in order to carry planet gears (30) distributed angularly about the axis (A10) of the planet carrier,
**characterized in that** the framework comprises at least one plate (20) arranged and configured in order to form a cylindrical shell, said plate having openings (21) through which a planet gear (30) projects radially,
**and in that** the plate (20) has a longitudinal groove (25) extending from at least one side of the openings, along a direction parallel to the axis of the planet carrier, so as to support one or more rotation-guiding shafts (31) protruding from said planet gears (30).

2. Planet carrier (10) according to claim 1, **characterized in that** each groove (25) opens radially through a passage (26) the width of which is smaller than the diameter of the rotation-guiding shaft (31) that it receives so as to allow a radial clip-in insertion of said guide shaft.

3. Planet carrier (10) according to claim 1 or 2, **characterized in that** the framework is arranged and configured in order to form only a cylindrical shell.

4. Planet carrier (10) according to one of claims 1 to 3, **characterized in that** the framework consists of a single plate (20).

5. Planet carrier (10) according to one of claims 1 to 4, **characterized in that** it is made of metallic material.

6. Planet carrier (10) according to one of claims 1 to 4, **characterized in that** it is made of plastic material.

7. Planet carrier (10) according to one of claims 1 to 6, **characterized in that** it comprises at least one planet gear (30).

8. Planet carrier (10) according to claim 7, **characterized in that** the at least one planet gear (30) has at least two rotation-guiding shafts (31) on both sides of a toothed part of said gear, each rotation-guiding shaft being arranged and configured in order to be rotatably guided by a groove (25) of the framework of the planet carrier.

9. Method for producing a planet carrier (10) according to any one of claims 1 to 8, comprising the following steps:
- supplying a plate (20) of a determined length,
- cutting portions at regular intervals, so as to form the openings (21) in order to receive the planets (30) in said plate,
- shaping the plate (20) along a line passing through each opening, so as to form the groove or grooves (25) of said opening,
- bending the plate (20) so as to form a cylindrical shell,
- fixedly connecting the ends of the plate to each other.

10. Method for producing a planet carrier (10) according to the preceding claim, further comprising the following steps:
- cutting a first end of the plate so as to form a female dovetail (22) and cutting a second end of said plate, opposite the first, so as to form a male dovetail (23), said dovetails being arranged and configured in order to interlock with each other,
- introducing the male dovetail (23) into the female dovetail (22), after having bent the plate (20) cylindrically, in order to join said ends.

11. Method for producing a planet carrier (10) according to any one of claims 1 to 8, **characterized in that** the planet carrier is injection-moulded.

12. Method for assembling a planet carrier (10) according to any one of claims 1 to 8, **characterized in that** it contains the steps consisting of:
- creating the framework of the planet carrier,
- introducing a gear (30) equipped with at least one rotation-guiding shaft (31) and forming a planet into the opening or openings (21) of the framework, in such a way that said rotation-guiding shaft is in a coaxial position in a groove (25) of the framework.

13. Method for assembling according to the preceding claim, **characterized in that** each groove (25) opens radially through a passage (26) the width of which is smaller than the diameter of the rotation-guiding shaft (31) that it receives, in such a way that during the step of introducing a planet (30) into a groove (25), said step comprises an operation of clipping each shaft (31) of a planet gear into each groove (25).

14. Brake actuator comprising a planet carrier (10) according to any one of claims 1 to 8.
